# EUROPEAN PATENT SPECIFICATION

(11) **EP 1 761 856 B1**
(45) Date of publication and mention of the grant of the patent: **22.07.2009**
(21) Application number: 05749413.0
(22) Date of filing: 13.05.2005
(51) Int. Cl.: G06F 13/24

(54) **COMPUTER SYSTEM AND METHOD FOR QUEUING INTERRUPT MESSAGES IN A DEVICE COUPLED TO A PARALLEL COMMUNICATIONS BUS**
COMPUTERSYSTEM UND VERFAHREN ZUM EINREIHEN VON INTERRUPT-NACHRICHTEN IN WARTESCHLANGEN IN EINER AN EINEN PARALLELEN KOMMUNIKATIONSBUS ANGEKOPPELTEN EINRICHTUNG
SYSTEME INFORMATIQUE ET PROCEDE PERMETTANT DE METTRE EN FILE D'ATTENTE DES MESSAGES D'INTERRUPTION DANS UN DISPOSITIF COUPLE A UN BUS DE COMMUNICATION PARALLELE

(30) Priority: 22.06.2004 US 710140
(43) Date of publication of application: 14.03.2007
(73) Proprietor: GENERAL ELECTRIC COMPANY, Schenectady, NY 12345 (US)
(72) Inventor: DAVIES, Norman, Barboursville, VA 22923 (US); HATFIELD, Darrell, Faber, VA 22938 (US); KATTWINKEL, Frank, Charlottesville, VA 22911 (US); WELLS, Owen, N., Ruckersville, VA 22968 (US)
(74) Representative: Illingworth-Law, William Illingworth
(86) International application number: PCT/US2005/016907
(87) International publication number: WO 2006/007099

(56) References cited:
- EP-A- 0 263 886
- US-A- 5 828 891
- US-A- 5 956 516

## Description

### BACKGROUND OF THE INVENTION

Computer systems have been developed that utilize a Peripheral Component Interconnect (PCI) bus. The PCI bus requires that exactly one PCI host device and one or more non-host PCI devices be operably coupled to the PCI bus. The PCI bus optionally includes a set of interrupt lines that are coupled between the PCI host device and the non-host PCI devices. Any non-host PCI device can change a voltage on an interrupt line to interrupt the PCI host device, causing the PCI host device to suspend whatever task it was performing and carry out a higher priority task associated with the interrupt.

During operation, a receiving device on a PCI bus that receives an interrupt signal generates one or more bus cycles to send a specific acknowledgement of the interrupt signal to the sending device. Thus, the receiving device can recognize only one interrupt signal between each interrupt acknowledgement. In a complex system, the amount of time for the receiving device to acknowledge an interrupt signal can become significant, and the acknowledgement time interval directly affects how quickly the sending device can send one interrupt signal after another. Thus, when two or more conditions occur in rapid succession where each warrant an interrupt signal, a relatively large time delay can occur in communicating the interrupt signals to the respective devices.

Thus, it would be desirable to have a parallel bus system that allows a receiving device to receive a plurality of interrupt messages where an acknowledgement is not transmitted for each interrupt message, but instead each message is stored in a memory queue upon receipt thereof

### BRIEF DESCRIPTION OF THE INVENTION

US-A-5 956 516 discloses a computer system including a processor, a host bridge and an I/O bus which may be implemented according to PCI specifications. The host bridge may provide interrupt messages to the processor in response to interrupt request signals from two types of peripheral devices. A first type of peripheral device provides interrupt request signals through dedicated interrupt lines. A second type of peripheral device provides interrupt request signals through address and data lines.

Aspects of the present invention are defined in the accompanying claims.

Other systems and/or methods according to the embodiments will become or are apparent to one with skill in the art upon review of the following drawings and detailed description. It is intended that all such additional systems and methods be within the scope of the present invention, and be protected by the accompanying claims.

### BRIEF DESCRIPTION OF THE DRAWINGS

Figure 1 is a schematic of a computer system in accordance with an exemplary embodiment;
Figure 2 is a more detailed schematic of a portion of the computer system of Figure 1;
Figures 3 and 4 are flowcharts of a method for queuing interrupt messages using the computer system of Figure 1 in accordance with another exemplary embodiment.

### DETAILED DESCRIPTION OF THE INVENTION

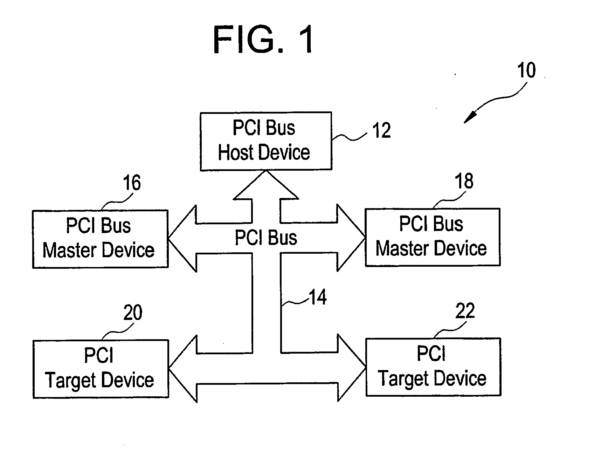

Referring to Figure 1, a computer system 10 is provided. As shown, the computer system 10 includes a PCI bus host device 12, a PCI bus 14, a PCI bus master device 16, a PCI bus master device 18, a PCI target device 20, and a PCI target device 22. An advantage of the computer system 10 is that the system 10 allows a device coupled to the parallel communication bus to queue multiple interrupt messages for performing tasks associated with the interrupt messages either immediately or at a future time. An interrupt signal or interrupt message induces a target device to temporarily suspend the other tasks of the target device, while the target device performs the tasks indicated by the interrupt message.

The PCI host device 12 is provided to perform tasks associated with facilitating communication through the PCI communication bus 14. The PCI host device 12 assigns a unique address range to each of the devices coupled to the PCI communication bus 14. Further, the PCI bus arbiter in the PCI host device 12 authorizes only one device coupled to the bus 14 to initiate a data transfer on the bus 14 at a specific time. In an alternate embodiment, the PCI bus arbiter can reside in a device other than the PCI host device 12.

The PCI bus 14 is provided to facilitate communication between the various devices attached to the bus 14. As shown, the bus 14 is operably coupled to the PCI bus host device 12, the PCI bus master device 16, the PCI bus master device 18, the PCI target device 20, and the PCI target device 22. It should be noted that in an alternate embodiment, the PCI communication bus 14 could be replaced with another type of bus, such as a VME bus for example.

The PCI bus master devices 16, 18 are provided to transmit PCI interrupt messages through the bus 14 to any device operably coupled to the bus 14. The PCI bus master device 16 comprises any device operably coupled to the bus 14 that has the ability to initiate a data transfer on the bus 14. For example, the PCI bus master device can be the PCI bus master device 16, the PCI bus master device 18, and the PCI host device 12. In particular, each of the PCI bus master devices 16 and 18 comprise a computer configured to transmit one or more PCI messages through the bus 14. Further, each of the devices 16 and 18 transmit an interrupt message by performing a bus write cycle through the bus 14 to a particular memory address that is assigned to the target device. Each interrupt message has a data portion with a plurality of bits that contain information that influences how the receiving device will react to the interrupt message. The information comprises one or more of the following: the identity of the sending device; the priority of the interrupt message; or the reason for the interrupt message. The target device 20 can comprise any of the devices operably coupled to the bus 14. For example, the PCI bus master device 16 can transmit interrupt messages to the PCI bus master device 18, the PCI target device 20, the PCI target device 22, and the PCI host device 12.

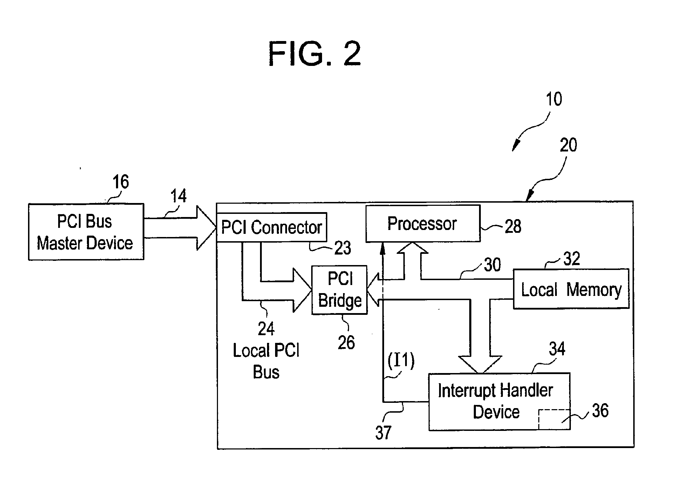

Referring to Figure 2, a schematic of a portion of the computer system 10 is illustrated including the PCI bus master device 16 and the PCI target device 20.

The PCI target device 20 includes a PCI connector 23, a local PCI bus 24, a PCI bridge 26, a processor 28, a local memory bus 30, a memory 32, and an interrupt handler device 34. The PCI connector 23 is provided to operably couple the PCI target device 20 with the PCI communication bus 14. The local PCI bus 24 is operably coupled between the PCI connector 23 and the PCI bridge 26 and routes interrupt messages for the device 20 from the communication bus 14 to the PCI bridge 26. An advantage of the PCI target device 20 is that the target device 20 can queue a plurality of interrupt messages in memory 36 and thereafter execute a plurality of interrupt tasks responsive thereto.

The PCI communication bridge 26 is provided to transmit interrupt messages for device 20 through the local memory bus 30 to the interrupt handler device 34. In particular, when the PCI communication bridge 26 receives an interrupt message, the PCI communication bridge 26 performs a bus write cycle to a particular address that is assigned to the interrupt handler device 34. Thereafter, the interrupt handler device 34 writes the interrupt message to a predetermined address in the memory 36. In an alternate embodiment, the interrupt handler device 34 writes the interrupt message to a predetermined address in the memory 32. Further, in another alternate embodiment, the PCI communication bridge 26 can be embedded within the processor 28.

The processor 28 is provided to control communication through the bus 30 and to execute interrupt tasks (e.g., interrupt service request subroutines) in response to interrupt messages. The processor 28 is operably coupled to the bus 30 and is further coupled to the interrupt handler device 34. An interrupt communication line 37 is disposed between the processor 28 and the interrupt handler device 34. When the processor 28 receives an interrupt signal (I1) from the interrupt handler device 34, the processor 28 retrieves an interrupt message stored in memory 36 by the interrupt handler device 34. Thereafter, the processor 28 either: (i) executes a task associated with the interrupt message, or (ii) modifies process state variables such that the processor 28 will execute a task associated with the interrupt message at a future time. Thereafter, if there are more interrupt messages in the queue that have not been retrieved by the processor 28, the processor 28 continues to receive an interrupt signal from the interrupt handler device 34. In response to receiving the interrupt signal, processor 28 continues to retrieve interrupt messages from the queue and execute tasks associated with those interrupt messages until the queue becomes empty.

In an alternate embodiment, the interrupt handler device 34 sends another distinct interrupt signal to the processor 28 to indicate that an interrupt message is still pending. In yet another alternate embodiment, a protocol between processor 28 and the interrupt handler device 34 is defined such that the processor 28 determines if the interrupt queue is empty.

In still another alternate embodiment of the target device 20, a plurality of additional interrupt communication lines are disposed between the processor 28 and the interrupt handler device 34. Each interrupt communication line is configured to transmit a signal indicative of a distinct interrupt message. When the processor 28 receives a signal from the interrupt handler device 34 via an interrupt communication line, the processor 28 executes a task associated with that interrupt communication line. Thus, in this alternate embodiment, the processor 28 does not need to read the interrupt message from any device to determine which interrupt task to execute. Instead, the interrupt handler device 34 indicates the type of interrupt by transmitting a signal over a predetermined interrupt communication line of the plurality of interrupt communication lines to the processor 28.

The interrupt handler device 34 is operably coupled to the bus 30 and is configured to receive and store interrupt messages received from any PCI bus master device couple to the bus 14. As shown, the interrupt handler device 34 contains the internal memory device 36. In particular, the interrupt handler device 34 is configured to determine a memory address within the memory 36 for storing each interrupt message. Further, the device 34 is configured to transmit a signal (I1) to the processor 28 through the interrupt communication line 37 indicating that an interrupt message was received and stored within the memory 36. The interrupt handler device 34 comprises an application-specific integrated circuit (ASIC). In alternate embodiments, the interrupt handler device 34 can comprise a configurable programmable logic device (CPLD), a field programmable gate array (FPGA), a custom masked logic device, or other logical devices.

In an alternate embodiment, the interrupt handler device 34 does not have internal memory 36, but instead writes to a local memory 32 to store and retrieve interrupt messages. Thus, the interrupt handler device 34 writes to the local memory 32 to store the messages, and the processor 28 reads from the local memory 32 to retrieve interrupt messages.

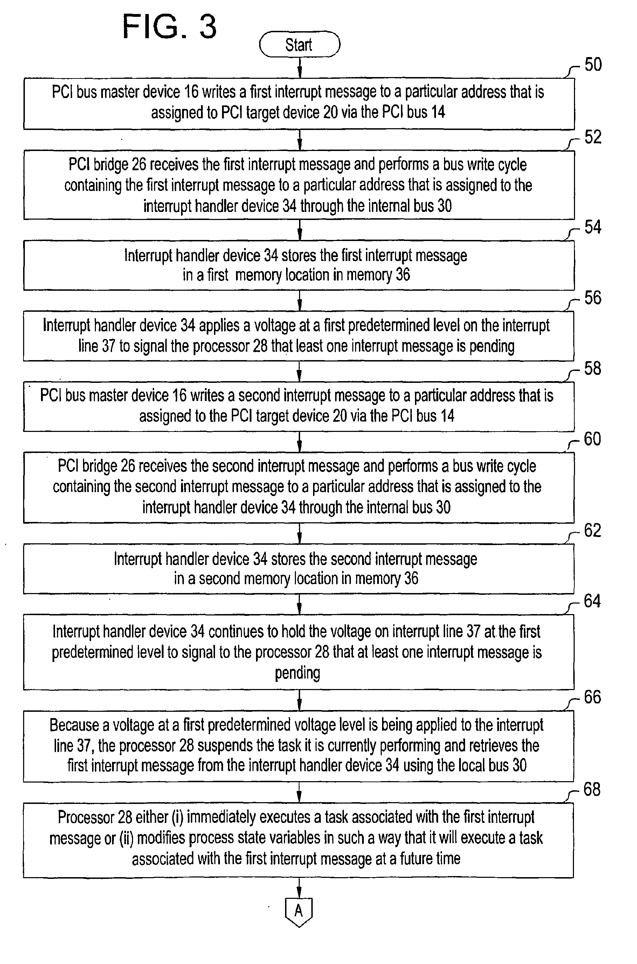

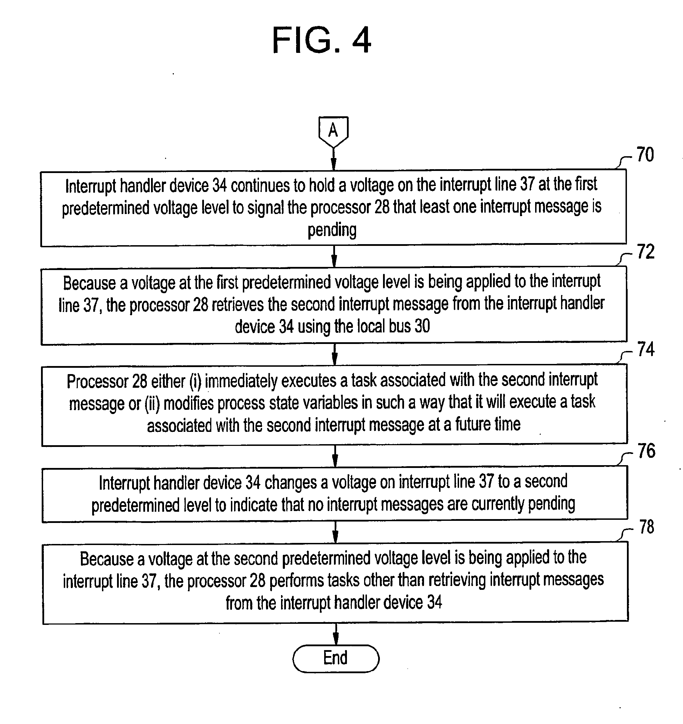

Referring now to Figures 3 and 4, a method for queuing multiple interrupt messages using the computer system 10 will be explained.

At step 50, the PCI bus master device 16 writes a first interrupt message to a particular address that is assigned to PCI target device 20, via the PCI bus 14.

At step 52, the PCI bridge 26 receives the first interrupt message and performs a bus write cycle containing the first interrupt message to a particular address that is assigned to the interrupt handler device 34 through the internal bus 30.

At step 54, the interrupt handler device 34 stores the first interrupt message in a first memory location of memory 36.

At step 56, the interrupt handler device 34 applies a voltage at a first predetermined level on the interrupt line 37 to signal the processor 28 that at least one interrupt message is pending.

At step 58, the PCI bus master device 16 writes a second interrupt message to a particular address that is assigned to the PCI target device 20 via the PCI bus 14.

At step 60, the PCI bridge 26 receives the second interrupt message and performs a bus write cycle containing the second interrupt message to a particular address that is assigned to the interrupt handler device 34 through the internal bus 30.

At step 62, the interrupt handler device 34 stores the second interrupt message in a second memory location of the memory 36.

At step 64, the interrupt handler device 34 continues to hold the voltage on interrupt line 37 at the first predetermined level to signal to the processor 28 that at least one interrupt message is pending.

At step 66, because a voltage at a first predetermined voltage level is being applied to the interrupt line 37, the processor 28 suspends the task it is currently performing and retrieves the first interrupt message from the interrupt handler device 34 using the local bus 30.

At step 68, the processor 28 either (i) immediately executes a task associated with the first interrupt message or (ii) modifies process state variables in such a way that it will execute a task associated with the first interrupt message at a future time.

At step 70, the interrupt handler device 34 continues to hold a voltage on the interrupt line 37 at the first predetermined voltage level to signal the processor 28 that at least one interrupt message is pending.

At step 72, because a voltage at the first predetermined voltage level is being applied to the interrupt line 37, the processor 28 retrieves the second interrupt message from the interrupt handler device 34 using the local bus 30.

At step 74, the processor 28 either (i) immediately executes a task associated with the second interrupt message or (ii) modifies process state variables in such a way that it will execute a task associated with the second interrupt message at a future time.

At step 76, the interrupt handler device 34 changes a voltage on interrupt line 37 to a second predetermined level to indicate that no interrupt messages are currently pending.

Finally, at step 78, because a voltage at the second predetermined voltage level is being applied to the interrupt line 37, the processor 28 performs tasks other than retrieving interrupt messages from the interrupt handler device 34.

The computer system and the method for queuing multiple interrupt messages provide a substantial advantage over other systems and methods. In particular, the system and method provide a technical effect of allowing a device coupled to parallel communication bus to queue multiple interrupt messages for performing tasks associated with the interrupt messages either immediately or at a future time.

As described above, the present invention can be embodied in the form of computer-implemented processes and apparatuses for practicing those processes. The present invention can also be embodied in the form of computer program code containing instructions embodied in tangible media, such as floppy diskettes, CD ROMs, hard drives, or any other computer-readable storage medium, wherein, when the computer program code is loaded into and executed by a computer, the computer becomes an apparatus for practicing the invention. The present invention can also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and/or executed by a computer, the computer becomes an apparatus for practicing the invention. When implemented on a general-purpose microprocessor, the computer program code segments configure the microprocessor to create specific logic circuits.

While the invention is described with reference to an exemplary embodiment, it will be understood by those skilled in the art that various changes may be made and equivalence may be substituted for elements thereof without departing from the scope of the invention. In addition, many modifications may be made to the teachings of the invention to adapt to a particular situation without departing from the scope thereof. Therefore, it is intended that the invention not be limited to the embodiment disclosed for carrying out this invention, but that the invention includes all embodiments falling with the scope of the intended claims. Moreover, the use of the term's first, second, etc. does not denote any order of importance, but rather the term's first, second, etc. are used to distinguish one element from another.

## Claims

1. A computer system (10), comprising:
a parallel communication bus (14); and
a first device (20) operably coupled to the parallel communication bus (14), the first device (20) configured to receive first and second interrupt messages transmitted through the parallel communication bus (14) to a first bus address associated with the first device (20), the first and second interrupt messages each comprising a plurality of bits,
wherein the first device (20) comprises a bridge communication device (26), a processor (28), an interrupt handler device (34), and an internal bus (30) operably coupled to the bridge communication device (26), the processor (28), and the interrupt handler device,
the bridge communication device (26) being arranged to receive the first interrupt message and to transmit the first interrupt message to the interrupt handler device (34);
the interrupt handler device (34) being arranged to write the interrupt message to a predetermined address in a memory (32,36) and when the processor (28) receives an interrupt signal (I1) from the interrupt handler device (34), the processor (28) is arranged to retrieve the interrupt message stored in the memory (32,36) by the interrupt handler device (34); and
wherein the first device (20) is configured to store the first and second interrupt messages in first and second memory locations, respectively, of the memory (32,36) and to perform at least one task associated with the first interrupt message.

2. The computer system (10) of claim 1, wherein the parallel communication bus (14) comprises one of a PCI communication bus, a PCI-X communication bus, a CompactPCI communication bus, a VME communication bus, a VME64 communication bus, and a VME64x communication bus.

3. The computer system (10) of claim 1, further comprising a second device (16) operably coupled to the parallel communication bus (14), the second device (16) configured to transmit the first and second interrupt messages through the parallel communication bus (14) to the first device (20).

4. The computer system (10) of claim 1, further comprising second and third devices (16, 18) operably coupled to the parallel communication bus (14), the second device (16) configured to transmit the first interrupt message through the communication bus (14) to the first device (20), and the third device (18) configured to transmit the second interrupt message through the communication bus (14) to the first device (20).

5. A method for queuing interrupt messages in the first device of claim 1 (20) operably coupled to a parallel communication bus (14), the method comprising:
receiving first and second interrupt messages transmitted through the parallel communication bus (14) to a first bus address associated with the first device (20);
storing the first and second interrupt messages in first and second memory locations, respectively, of a memory (36) associated with the first device (20), the first and second interrupt messages each comprising a plurality of bits; and
when an interrupt signal is received retrieving the first interrupt message from the first memory location and performing at least one task associated with the first interrupt message utilizing the first device (20).

6. The method of claim 5, wherein the parallel communication bus (14) comprises one of a PCI communication bus, a PCI-X communication bus, a CompactPCI communication bus, a VME communication bus, a VME64 communication bus, and a VME64x communication bus.

7. The method of claim 5, further comprising:
writing the first interrupt message via a first write cycle to the first device (20) through the parallel communication bus (14); and
writing the second interrupt message via a second write cycle to the first device (20) through the parallel communication bus (14).

8. The method of claim 5, further comprising retrieving the second interrupt message from the memory and performing at least one task associated with the second interrupt message after retrieving the second interrupt message from the memory.

9. An article of manufacture, comprising:
a computer storage medium having a computer program encoded therein which when executed implements the method steps of claim 5.

## Patentansprüche

1. Computersystem (10), aufweisend:
einen parallelen Kommunikationsbus (14); und
eine erste Einrichtung (20), die funktionell mit dem parallelen Kommunikationsbus (14) gekoppelt ist, wobei die erste Einrichtung (20) dafür eingerichtet ist, erste und zweite Interrupt-Meldungen zu empfangen, die über den parallelen Kommunikationsbus (14) an eine der ersten Einrichtung (20) zugeordnete erste Busadresse übertragen werden, wobei die ersten und zweiten Interrupt-Meldungen jeweils mehrere Bits aufweisen,
wobei die erste Einrichtung (20) eine Brückenkommunikationseinrichtung (26), einen Prozessor (28), eine Interrupt-Behandlungseinrichtung (34) und einen internen Bus (30) aufweist, der funktionell mit der Brückenkommunikationseinrichtung (26), dem Prozessor (28) und der Interrupt-Behandlungseinrichtung gekoppelt ist,
wobei die Brückenkommunikationseinrichtung (26) dafür eingerichtet ist, die erste Interrupt-Meldung zu empfangen und die erste Interrupt-Meldung an die Interrupt-Behandlungseinrichtung (34) zu übertragen;
wobei die Interrupt-Behandlungseinrichtung (34) dafür eingerichtet ist, die Interrupt-Meldung an eine vorbestimmte Adresse in einen Speicher (32, 36) zu schreiben, und wenn der Prozessor (28) ein Interrupt-Signal (I1) aus der Interrupt-Behandlungseinrichtung (34) empfängt, der Prozessor (28) dafür eingerichtet ist, die in dem Speicher (32, 36) gespeicherte Interrupt-Meldung durch die Interrupt-Behandlungseinrichtung (34) auszulesen; und
wobei die erste Einrichtung (20) dafür konfiguriert ist, die ersten und zweiten Interrupt-Meldungen in ersten bzw. zweiten Speicherstellen des Speichers (32, 36) zu speichern und wenigstens eine der ersten Interrupt-Meldung zugeordnete Aufgabe auszuführen.

2. Computersystem (10) nach Anspruch 1, wobei der parallele Kommunikationsbus (14) aus einem von einem PCI Kommunikationsbus, einem PCI-X Kommunikationsbus, einem CompactPCI Kommunikationsbus, einem VME Kommunikationsbus, einem VME64 Kommunikationsbus und einem VME64x Kommunikationsbus besteht.

3. Computersystem (10) nach Anspruch 1, welches ferner eine zweite Einrichtung (16) aufweist, die funktionell mit dem parallelen Kommunikationsbus (14) gekoppelt ist, wobei die zweite Einrichtung (16) dafür konfiguriert ist, die ersten und zweiten Interrupt-Meldungen über den parallelen Kommunikationsbus (14) an die erste Einrichtung (20) zu übertragen.

4. Computersystem (10) nach Anspruch 1, welches ferner zweite und dritte Einrichtungen (16, 18) aufweist, die funktionell mit dem parallelen Kommunikationsbus (14) gekoppelt sind, wobei die zweite Einrichtung (16) dafür konfiguriert ist, die erste Interrupt-Meldung über den Kommunikationsbus (14) an die erste Einrichtung (20) zu übertragen, und die dritte Einrichtung (18) dafür konfiguriert ist, die zweite Interrupt-Meldung über den Kommunikationsbus (14) an die erste Einrichtung (20) zu übertragen.

5. Verfahren zum Einreihen von Interrupt-Meldungen in die erste Einrichtung des Anspruches 1 (20), die funktionell mit einem parallelen Kommunikationsbus (14) gekoppelt ist, wobei das Verfahren die Schritte aufweist:
Empfangen erster und zweiter Interrupt-Meldungen, die über den parallelen Kommunikationsbus (14) an eine der ersten Einrichtung (20) zugeordnete erste Busadresse übertragen werden;
Speichern der ersten und zweiten Interrupt-Meldungen in ersten bzw. zweiten Speicherstellen eines der ersten Einrichtung (20) zugeordneten Speichers (36), wobei die ersten und zweiten Interrupt-Meldungen jeweils mehrere Bits aufweisen; und
wenn ein Interrupt-Signal empfangen wird, Auslesen der ersten Interrupt-Meldung aus der ersten Speicherstelle und Durchführen wenigstens einer der ersten Interrupt-Meldung zugeordneten Aufgabe unter Nutzung der ersten Einrichtung (20).

6. Verfahren nach Anspruch 5, wobei der parallele Kommunikationsbus (14) aus einem von einem PCI Kommunikationsbus, einem PCI-X Kommunikationsbus, einem CompactPCI Kommunikationsbus, einem VME Kommunikationsbus, einem VME64 Kommunikationsbus und einem VME64x Kommunikationsbus besteht.

7. Verfahren nach Anspruch 5, ferner mit den Schritten:
Schreiben der ersten Interrupt-Meldung mittels eines ersten Schreibzyklusses an die erste Einrichtung (20) über den parallelen Kommunikationsbus (14); und
Schreiben der zweiten Interrupt-Meldung mittels eines zweiten Schreibzyklusses an die erste Einrichtung (20) über den parallelen Kommunikationsbus (14).

8. Verfahren nach Anspruch 5, welches ferner den Schritt des Auslesens der zweiten Interrupt-Meldung aus dem Speicher und des Durchführens wenigstens einer der zweiten Interrupt-Meldung zugeordneten Aufgabe nach dem Auslesen der zweiten Interrupt-Meldung aus dem Speicher aufweist.

9. Herstellungsgegenstand, aufweisend:
ein Computerspeichermedium mit einem darin codierten Computerprogramm, welches, wenn es ausgeführt wird, die Verfahrensschritte des Anspruches 5 implementiert.

## Revendications

1. Système informatique (10) comprenant :
un bus (14) de communication parallèle ; et
un premier dispositif (20) couplé de manière fonctionnelle au bus (14) de communication parallèle, le premier dispositif (20) étant conçu pour recevoir un premier et un second messages d'interruption transmis à travers le bus (14) de communication parallèle à une première adresse de bus associée au premier dispositif (20), le premier et le second messages d'interruption comprenant chacun une pluralité de bits,
dans lequel le premier dispositif (20) comprend un dispositif (26) de communication formant pont, un processeur (28), un dispositif (34) gestionnaire d'interruptions, et un bus interne (30) couplé de manière fonctionnelle au dispositif (26) de communication formant pont, au processeur (28) et au dispositif gestionnaire d'interruptions,
le dispositif (26) de communication formant pont étant disposé pour recevoir le premier message d'interruption et pour le transmettre au dispositif (34) gestionnaire d'interruptions ;
le dispositif (34) gestionnaire d'interruptions étant disposé pour écrire le message d'interruption à une adresse prédéterminée dans une mémoire (32, 36) et lorsque le processeur (28) reçoit un signal (I1) d'interruption provenant du dispositif (34) gestionnaire d'interruptions, le processeur (28) est disposé pour extraire le message d'interruption stocké dans la mémoire (32, 36) par le dispositif (34) gestionnaire d'interruptions ; et
dans lequel le premier dispositif (20) est conçu pour stocker le premier et le second messages d'interruption respectivement dans un premier et un second emplacements de la mémoire (32, 36) et pour exécuter au moins une tâche associée au premier message d'interruption.

2. Système informatique (10) selon la revendication 1, dans lequel le bus (14) de communication parallèle comprend un élément parmi un bus de communication PCI, un bus de communication PCI-X, un bus de communication CompactPCI, un bus de communication VME, un bus de communication VME64, et un bus de communication VME64x.

3. Système informatique (10) selon la revendication 1, comprenant en outre un deuxième dispositif (16) couplé de manière fonctionnelle au bus (14) de communication parallèle, le deuxième dispositif (16) étant conçu pour transmettre le premier et le second messages d'interruption à travers le bus (14) de communication parallèle au premier dispositif (20).

4. Système informatique (10) selon la revendication 1, comprenant en outre un deuxième et un troisième dispositifs (16, 18) couplés de manière fonctionnelle au bus (14) de communication parallèle, le deuxième dispositif (16) étant conçu pour transmettre le premier message d'interruption à travers le bus (14) de communication au premier dispositif (20), et le troisième dispositif (18) étant conçu pour transmettre le second message d'interruption à travers le bus (14) de communication au premier dispositif (20).

5. Procédé permettant de mettre en file d'attente des messages d'interruption dans le premier dispositif (20) selon la revendication 1 couplé de manière fonctionnelle à un bus (14) de communication parallèle, le procédé consistant à :
recevoir le premier et le second messages d'interruption transmis à travers le bus (14) de communication parallèle à une première adresse de bus associée au premier dispositif (20) ;
stocker le premier et le second messages d'interruption respectivement dans un premier et un second emplacements d'une mémoire (36) associée au premier dispositif (20), le premier et le second messages d'interruption comprenant chacun une pluralité de bits ; et
lorsqu'un signal d'interruption est reçu, extraire le premier message d'interruption du premier emplacement de la mémoire et exécuter au moins une tâche associée au premier message d'interruption à l'aide du premier dispositif (20).

6. Procédé selon la revendication 5, dans lequel le bus (14) de communication parallèle comprend un élément parmi un bus de communication PCI, un bus de communication PCI-X, un bus de communication CompactPCI, un bus de communication VME, un bus de communication VME64, et un bus de communication VME64x.

7. Procédé selon la revendication 5, consistant en outre à :
écrire le premier message d'interruption via un premier cycle d'écriture au premier dispositif (20) à travers le bus (14) de communication parallèle ; et
écrire le second message d'interruption via un second cycle d'écriture au premier dispositif (20) à travers le bus (14) de communication parallèle.

8. Procédé selon la revendication 5, consistant en outre à extraire le second message d'interruption de la mémoire et à exécuter au moins une tâche associée au second message d'interruption après avoir extrait le second message d'interruption de la mémoire.

9. Article manufacturé, comprenant :
un support de stockage informatique muni d'un programme informatique codé qui, lorsqu'il est exécuté, met en oeuvre les étapes du procédé selon la revendication 5.
